# EUROPÄISCHE PATENTSCHRIFT

(11) **EP 2 831 164 B1**
(45) Veröffentlichungstag und Bekanntmachung des Hinweises auf die Patenterteilung: **18.09.2019**
(21) Anmeldenummer: 13711415.3
(22) Anmeldetag: 22.03.2013
(51) Int. Cl.: C08K 7/02, C08G 59/22, C08G 59/38

(54) **THERMISCH EXPANDIERBARE ZUBEREITUNGEN**
THERMALLY EXPANDABLE PREPARATIONS
PRÉPARATIONS THERMIQUEMENT EXPANSIBLES

(30) Priorität: 29.03.2012 DE 102012205057
(43) Veröffentlichungstag der Anmeldung: 04.02.2015
(73) Patentinhaber: Henkel AG & Co. KGaA, 40589 Düsseldorf (DE)
(72) Erfinder: BARRIAU, Emilie, Niguel Laguna, California 92677 (US); RENKEL, Martin, 40215 Düsseldorf (DE); SCHÖNFELD, Rainer, 40627 Düsseldorf (DE); WUCHERPFENNIG, Sven, 41542 Dormagen (DE); WELTERS, Tim, 40723 Hilden (DE)
(86) Internationale Anmeldenummer: PCT/EP2013/056087
(87) Internationale Veröffentlichungsnummer: WO 2013/144016

(56) Entgegenhaltungen:
- WO-A1-99/16840
- WO-A1-2011/138254
- DE-A1-102008 053 520
- DE-A1-102009 028 100

## Beschreibung

Die vorliegende Anmeldung betrifft eine bei Applikationstemperaturen unterhalb von 70°C pumpbare, thermisch expandierbare Zubereitung, die eine Kombination spezieller Epoxidharze, einen thermisch aktivierbaren Härter, ein thermisch aktivierbares Treibmittel sowie speziell ausgewählte organische Fasern enthält, ein Verfahren zum Versteifen von Bauteilen mit dünnwandigen Strukturen mit derartigen Zubereitungen sowie die Verwendung dieser Zubereitungen zur Versteifung von derartigen Strukturen.

Leichtbauteile für eine konstant maßhaltige Serienfertigung mit hoher Steifigkeit und Strukturfestigkeit werden für viele Anwendungsgebiete benötigt. Insbesondere im Fahrzeugbau besteht wegen der dort gewünschten Gewichtsersparnis ein hoher Bedarf an Leichtbauteilen aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch leicht zu Deformation. Daher ist es bereits seit einiger Zeit bekannt, bei Hohlkörperstrukturen diesen Hohlraum vollständig oder auch nur teilweise, beispielsweise in mechanisch besonders beanspruchten Teilbereichen, mit einem Strukturschaum auszuschäumen. Dadurch können einerseits Deformationen oder Verformungen minimiert oder sogar vollständig verhindert werden und andererseits Festigkeit und Steifigkeit der Hohlkörperstrukturen erhöht werden.

Üblicherweise sind derartige geschäumte Verstärkungs- und Versteifungsmittel entweder Metallschäume oder sie werden aus thermisch härt- und expandierbaren Zubereitungen, beispielsweise auf Basis von Epoxidharzen, hergestellt. Im letzteren Fall werden die Zubereitungen in der Regel in Form von thermisch härt- und expandierbare Formkörpern auf Basis von reaktiven Epoxidharzen, die mittels herkömmlicher Spritzgusstechniken hergestellt werden, bereitgestellt. Derartige Formkörper werden jeweils in ihrer räumlichen Gestaltung genau auf den gewünschten Anwendungszweck abgestimmt. Im Rahmen der Fertigung der Leichtbauteile werden die härt- und expandierbaren Formkörper dann vor Ort in die zu verstärkenden Bauteile eingeführt und in einem separaten Verfahrensschritt durch Erhitzung (beispielsweise im Rahmen des Lackierprozesses) ausgehärtet und aufgeschäumt. Derartige Formkörper und deren Verwendung werden beispielsweise im Rahmen der WO-A1-2004/065485 beschrieben. Allerdings müssen bei dieser Vorgehensweise für jedes zu verstärkende Bauteil aufwändig ein entsprechend ausgebildetes Formteil sowie die zu dessen Herstellung notwendigen Spritzgussformen entwickelt werden; ein flexibler Einsatz dieser Verstärkungsmittel ist folglich kaum möglich.

Weiterhin hat dieses Verfahren den Nachteil, dass die bei Raumtemperatur festen Zubereitung zur Herstellung der Formkörper erhitzt werden müssen, was unter Umständen dazu führen kann, dass der irreversible, stark exotherme Härtungsprozess bereits initiiert wird. Teilweise wird eine geringfügige Aushärtung der Systeme sogar bewusst in Kauf genommen, um die Formstabilität und Oberflächenbeschaffenheit der Formkörper zu optimieren.

Alternativ wurden beispielsweise in der WO-A2-2002/31077 Zweikomponentensysteme zur Versteifung von Bauteilen vorgeschlagen, die bereits bei Raumtemperatur härten. Allerdings bergen derartige Systeme erhöhte Risiken hinsichtlich der Dosiergenauigkeit, was sowohl die Expansionsrate als auch die resultierenden mechanischen Eigenschaften negativ beeinflusst. Außerdem ergeben sich bei derartigen bei Raumtemperatur härtenden Systemen Strukturschäume, die hinsichtlich ihrer thermomechanischen Eigenschaften den heiß-gehärteten Systemen unterlegen sind.

WO 2011/138254 offenbart eine Hitzehärtbare Zusammensetzung, enthaltend eine Mischung von reaktiven Epoxidharzen, mindestens einen latenten Härter, und weiterhin 0,1 bis 12 Gew.-% eines Treibmittels.

DE 10 2008 053520 offenbart thermisch expandier- und härtbare Masse enthaltend: ein Epoxid-Prepolymer, einen hitzeaktivierbaren Härter für das Prepolymer, ein Treibmittel, ein thermoplastisches, nicht reaktives Polyurethan, das eine Polyester-Kette enthält.

Als dritte Alternative können pastenförmige Strukturklebstoffe zum Einsatz kommen. Diese haben allerdings den Nachteil einer zu geringen Standfestigkeit, insbesondere wenn sie in größeren Schichtdicken appliziert werden. Außerdem neigen derartige pastenförmige Strukturklebstoffe dazu, während des Aufheizvorgangs aus dem gezielten Anwendungsbereich heraus zu fließen und so an der gewünschten Stelle nicht die volle Wirksamkeit zu entfalten.

Dementsprechend war es die Aufgabe der vorliegenden Erfindung, Zubereitungen zur Herstellung von Strukturschäumen für die lokale Verstärkung von Bauteilen zur Verfügung zu stellen, die im ungehärteten Zustand eine flüssige bis pastenförmige Konsistenz zeigen und dennoch bereits vor der Aushärtung eine ausreichend hohe Standfestigkeit aufweisen, so dass sie auch während des Aufheizprozesses am Auftragsort verbleiben und nicht in sich zusammensacken.

Überraschenderweise wurde nunmehr gefunden, dass thermisch expandierbare Zubereitungen, die eine Kombination von mindestens zwei speziell ausgewählten Epoxidharzen und speziellen organischen Fasern enthalten, ein derartiges Verhalten zeigen, dass einerseits eine gute Applizierbarkeit mittels herkömmlicher Pumpen gewährleistet ist und andererseits die aufgetragene Zubereitung bereits vor der Aushärtung eine ausreichende Standfestigkeit aufweist, so dass ein Abrutschen der Zubereitung aus dem Auftragsgebiet vor der Aushärtung beziehungsweise während des Aufheizvorgangs verhindert wird. Darüber hinaus zeichnen sich die ausgehärteten Zubereitungen durch mechanische Eigenschaften aus, die denen herkömmlicher Versteifungsschäume auf Basis von festen Formkörpern entsprechen.

Ein erster Gegenstand der vorliegenden Erfindung sind daher bei Applikationstemperaturen unterhalb von 70°C pumpbare, thermisch expandierbare Zubereitungen, enthaltend
(a) mindestens ein erstes Epoxidharz E1, das ein Epoxid-Äquivalentgewicht von höchstens 280g/eq und eine Viskosität bei 25°C von höchstens 1250Pa*s aufweist,
(b) mindestens ein zweites Epoxidharz E2, das ein Epoxid-Äquivalentgewicht von mindestens 300g/eq und eine Viskosität bei 25°C von höchstens 250Pa*s aufweist,
(c) mindestens einen thermisch aktivierbaren Härter,
(d) mindestens ein thermisch aktivierbares Treibmittel sowie
(e) mindestens 1 Gew.-% organische Fasern mit einer Faserlänge von 0,2mm bis 10mm.

Die erfindungsgemäßen Zubereitungen zeichnen sich insbesondere dadurch aus, dass sie reversibel (ohne eine nennenswerte Änderung des Temperatur-abhängigen Viskositätsverhaltens) auf Temperaturen bis zu 70°C erwärmt werden können und folglich mehrfach innerhalb dieses Temperaturbereichs mittels beheizter Pumpen transportiert und/oder umgeformt werden können.

Soweit nicht anders vermerkt werden die Viskositäten im Rahmen der vorliegenden Anmeldung unter den folgenden Messbedingungen bestimmt: Rotationsrheometer mit Platte-Platte-Geometrie (PP20), gemessen in Oszillation bei 10% Deformation und einer Frequenz von 100 rad/s, Schichtdicke des Materials 0,2mm.

Unter "bei Applikationstemperaturen unterhalb von 70°C pumpbaren Zubereitungen" werden erfindungsgemäß Zubereitungen verstanden, die bei Temperaturen unterhalb von 70°C mit herkömmlichen Pumpen mit einem Druck von weniger als 250bar, insbesondere weniger als 200bar, ganz besonders von 6 bis 180bar, aus einem Vorratsgefäß auf den Ort der Anwendung appliziert werden können. Zubereitungen, die bei Applikationstemperaturen im Bereich von 50 bis 60°C mit herkömmlichen Pumpen mit einem Druck von weniger als 250bar, insbesondere weniger als 200bar, ganz besonders von 6 bis 180bar, aus einem Vorratsgefäß auf den Ort der Anwendung appliziert werden können, sind besonders bevorzugt.

Ganz besonders bevorzugt sind erfindungsgemäß Zubereitungen, die "bei Applikationstemperaturen unterhalb von 70°C pumpbar" in dem Sinne sind, dass sie bei 60°C und einem Pumpendruck von 6bar einen Fluss von mindestens 100g/min, vorzugsweise von 150g/min bis 4500g/min, ganz bevorzugt von 250g/min bis 3000g/min aufweisen, wenn sie aus einer vollständig gefüllten, handelsüblichen Aluminiumdüsenkartusche mit einem Fassungsvolumen von 310ml und einem Innendurchmesser von 46mm, deren Austrittsöffnung mit Hilfe eines Kartuschenanstechers mit einem Außendurchmesser von 9mm geöffnet wurde, ohne Aufsatz einer Düse bei einer Temperatur von 60°C (nach 45Minuten Vortemperierung) und einem Druck von 6bar ausgebracht werden. Der Fluss gibt die Masse an Zubereitung an, die innerhalb von 1 Minute ausgebracht werden kann und wird dementsprechend in g/min angegeben.

Eine erste erfindungswesentliche Komponente ist ein erstes Epoxidharz E1, das ein Epoxid-Aquivalenzgewicht von höchstens 280g/eq und eine Viskosität bei 25°C von höchstens 1250Pa*s aufweist.

In einer Ausführungsform hat es sich als besonders vorteilhaft erwiesen, wenn das Epoxidharz E1
- in Epoxid-Äquivalentgewicht von höchstens 220g/eq, insbesondere von höchstens 200g/eq aufweist und/oder
- eine Viskosität bei 25°C von höchstens 20Pa*s, insbesondere von höchstens 15Pa*s aufweist und/oder
- in einer Menge von 10 bis 55Gew.-%, insbesondere von 20 bis 40Gew.-%, bezogen auf die gesamte anwendungsbereite Zubereitung, in der Zubereitung enthalten ist.

In einer Ausführungsform der vorliegenden Erfindung hat es sich als besonders bevorzugt erwiesen, wenn das Epoxidharz E1 bei 25°C eine Viskosität von mindestens 5Pa*s, insbesondere von mindestens 10Pa*s, aufweist.

Besonders bevorzugte Epoxidharze E1 sind Bisphenol-A und Bisphenol-F basierte Epoxidharze, die die erfindungswesentlichen Eigenschaften aufweisen.

Obwohl prinzipiell Epoxidharze mit beliebigen Funktionalitäten eingesetzt werden können, hat es sich im Rahmen der vorliegenden Erfindung als vorteilhaft erwiesen, wenn die Epoxidharze eine Epoxid-Funktionalität von 2 oder weniger aufweisen. Epoxidharze mit einer Epoxid-Funktionalität von 2 können ganz besonders bevorzugt sein.

Eine Gruppe der erfindungsgemäß bevorzugten Epoxidharze E1 ist die Gruppe der Reaktivverdünner. Reaktive Verdünner im Sinne dieser Erfindung sind Epoxigruppen enthaltende, niederviskose Substanzen (Glycidylether oder Glycidylester) mit aliphatischer oder aromatischer Struktur. Typische Beispiele für Reaktivverdünner sind Mono-, Di- oder Triglycidylether von C₆- bis C₁₄-Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C₆- bis C₂₄- Carbonsäuren oder deren Mischungen.

Weiterhin sind die folgenden Handelsprodukte erfindungsgemäß bevorzugte Epoxidharze E1:
- DER 331® (EEW 182 - 192 g/eq; Dow)
- Epikote® 834 (EEW 230 - 270 g/eq; Momentive)
- EPON® 828 (EEW184 - 190 g/eq; Momentive)
- DER® 354 (EEW 167 - 174 g/eq; Dow)
- DER® 736 (EEW 175 - 205 g/eq; Dow)
- DER® 351 (EEW 169 - 181 g/eq; Dow)
- DER® 332 (EEW 171 - 175 g/eq; Dow)
- Epon® 862 (EEW 166 - 177g/eq; Momentive)
- Erisys® GE-30 (EEW 135 - 150g/eq; CVC Thermoset Specialities)
- Erisys® GE-20 (EEW 125 - 137 g/eq; CVC Thermoset Specialities)
- Araldite® GY282 (EEW 166 - 177 g/eq; Huntsman)
- Araldite® GY260 (EEW 185 - 196 g/eq; Huntsman)
- Dehysol® D81 (EEW 240 g/eq; BASF)
- hydrierte Epoxidharze auf Basis von Bisphenol-A und/oder Bisphenol-F
- Araldite® MY0500 (EEW 105-115 g/eq; Huntsman)

Als zweite erfindungswesentliche Komponente enthalten die thermisch expandierbaren Zubereitungen mindestens ein zweites Epoxidharz E2, das ein Epoxid-Äquivalentgewicht von mindestens 300g/eq und eine Viskosität bei 25°C von höchstens 250Pa*s aufweist.

Dabei hat es sich als besonders bevorzugt erwiesen, wenn das zweite Epoxidharz E2
- ein Epoxid-Äquivalentgewicht von mindestens 400g/eq, insbesondere von mindestens 440g/eq, aufweist und/oder
- eine Viskosität bei 25°C von höchstens 200 Pa*s, insbesondere von höchstens 170Pa*s, aufweist und/oder
- in einer Menge von 5 bis 35Gew.-%, insbesondere von 8 bis 25 Gew.-%, bezogen auf die gesamte anwendungsbereite Zubereitung, in der Zubereitung enthalten ist.

In einer Ausführungsform der vorliegenden Erfindung hat es sich als besonders bevorzugt erwiesen, wenn das Epoxidharz E2 bei 25°C eine Viskosität von mindestens 1 Pa*s, insbesondere von mindestens 2,5Pa*s, aufweist.

Eine Gruppe erfindungsgemäß bevorzugter Epoxidharze E2 stellt die Gruppe der flexibilisierenden Harze dar, wie beispielsweise epoxidierte Poyletherstrukturen.

Erfindungsgemäß besonders bevorzugte Epoxidharze E2 sind beispielsweise die Handelsprodukte
- DER 732 (EEW 310-330 g/eq, Dow),
- Thioplast EPS-25 (EEW 500-600 g/eq; Akzo Nobel)
- Struktol Polydis® 3604 (EEW 330 g/eq; Schill & Seilacher)
- Struktol Polydis® 3605 (EEW 300 g/eq; Schill & Seilacher)
- Fortegra® 102 (EEW 345 - 374 g/eq; Dow)
- Adeka® EP-4005 (EEW 310 - 340 g/eq; Adeka)

Es hat sich erfindungsgemäß bevorzugt erwiesen, wenn die erfindungsgemäßen Anwendungszubereitungen eine Gesamtmenge an Epoxidharzen im Bereich von 20 bis 80Gew.-%, insbesondere von 30 bis 70Gew.-%, ganz besonders von 40 bis 60Gew.-%, bezogen auf die gesamte Anwendungszubereitung, enthalten. Die Gesamtmenge an Epoxidharzen umfasst dabei erfindungsgemäß sowohl die Mengen an erfindungswesentlichen Harzen E1 und E2 als auch alle übrigen in der Zubereitung gegebenenfalls vorhandenen Epoxidharze.

Als dritte erfindungswesentliche Komponente enthalten die erfindungsgemäßen thermisch expandierbaren Zubereitungen mindestens einen thermisch aktivierbaren Härter.

Unter einem thermisch aktivierbaren Härter werden erfindungsgemäß Verbindungen verstanden, die mindestens einen Monat bei 22°C gemeinsam mit den Epoxidharzen gelagert werden können, ohne dass die Härtungsreaktion in nennenswertem Umfang einsetzt. Vorzugsweise erst oberhalb von 80°C, insbesondere erst oberhalb von 100°C verändert sich die molekulare Struktur der thermisch aktivierbaren Härter, so dass derartige Verbindungen oberhalb dieser Temperatur als Härter wirken und die Polymerisationsreaktion der Epoxidharze starten und/oder beschleunigen.

Die thermisch aktivierbare Härter können beispielsweise ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Weiterhin können 3,3- Diaminodiphenylsulfon und 4,4-Diaminodiphenylsulfon sowie deren Derivate sowie Ionische Flüssigkeiten (Imidazolium Salze), wie etwa Baxxodur® ECX-2450 als latente Härter verwendet werden. Weiterhin sind die unter den Handelsbezeichungen Ancamine® 2014, Ancamine® 2337, Adeka® EH-4357 und Adeka® EH-4360 vertriebenen thermisch aktivierbaren Härter erfindungsgemäß bevorzugt. Ebenfalls bevorzugt sind die von der Firma Ajinomoto unter der Handelsbezeichnung Ajicure® vertriebenen Produkte, insbesondere die Produkte Ajicure® AH-300, Ajicure® PN23, Ajicure® PN50, Ajicure® MY24 und Ajicure® MY25.. Auch mikroverkapselte Systeme, wie sie unter der Handelsbezeichnung Novacure® von der Firma Asahi Denka vertrieben werden, sind erfindungsgemäß bevorzugt. Ganz besonders bevorzugt ist Dicyandiamid als thermisch aktivierbarer Härter geeignet.

Die thermisch aktivierbaren Härter, insbesondere Dicyandiamid, sind erfindungsgemäß vorzugsweise in einer Menge von 1 bis 15 Gew.-%, insbesondere von 2 bis 10 Gew.-%, jeweils bezogen auf die gesamte Anwendungszubereitung enthalten.

Zusätzlich zu den vorgenannten Härtern können erfindungsgemäß katalytisch wirksame substituierte Harnstoffe als Härtungsbeschleuniger eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Härtungsbeschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als Härtungs-beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Die Härtungsbeschleuniger für Epoxidharze sind erfindungsgemäß vorzugsweise in einer Menge von 0 bis 3Gew.-%, insbesondere von 0,1 bis 1,5Gew.-%, jeweils bezogen auf die gesamte Anwendungszubereitung enthalten.

Als vierte erfindungswesentliche Komponente enthalten die erfindungsgemäßen thermisch expandierbaren Zubereitungen ein thermisch aktivierbares Treibmittel. Als thermisch aktivierbare Treibmittel eignen sich im Prinzip alle bekannten Treibmittel wie beispielsweise "chemische Treibmittel", die bei thermischer Behandlung durch Zersetzung Gase freisetzen, oder "physikalische Treibmittel", dass heißt insbesondere thermisch expandierbare Hohlkugeln.

Unter einem chemischen Treibmittel werden erfindungsgemäß Verbindungen verstanden, die sich bei Einwirkung von Wärme zersetzen und dabei Gase freisetzen.

Beispiele für geeignete chemische Treibmittel sind Azoverbindungen, Hydrazidverbindungen, Nitrosoverbindungen und Carbazidverbindungen, wie beispielsweise Aazobisisobutyronitril, Azodicarbonamid (ADCA), Di-nitroso-pentamethylentetramin, 4,4'-Oxybis(benzolsulfonsäure hydrazid) (OBSH), 4-Methylbenzolsulfonsäurehydrazid, Azocyclohexylnitril, Azodiaminobenzol, Benzol-1,3-sulfonylhydrazid, Calciumazid, 4,4'-Diphenyldisulfonylazid, Diphenyl-sulfon-3,3'-disulfohydrazid, Benzol-1,3-disulfohydrazid, Trihydrazinotriazin, p-Toluolsulfonylhydrazid and p-Toluolsulfonylsemicarbazid.

Eine weitere Klasse geeigneter Treibmittel sind die H-Silane (Poly(methylhydrosiloxane)), die beispielsweise unter der Handelsbezeichnung Foaming Agent DY-5054 von Huntsmann vertrieben werden.

Weiterhin sind die in der DE-A1-102009029030 beschriebenen Carbamate als chemische, thermisch aktivierbare Treibmittel im Sinne der vorliegenden Erfindung besonders geeignet.

Die chemischen, thermisch aktivierbaren Treibmittel sind erfindungsgemäß vorzugsweise in einer Menge von 0,5 bis 6Gew.-%, insbesondere von 0,7 bis 3Gew.-%, jeweils bezogen auf die gesamte Anwendungszubereitung enthalten.

Die erfindungsgemäßen "chemischen Treibmittel" können vorteilhafter Weise in Kombination mit Aktivatoren und/oder Beschleunigern, wie beispielsweise Zinkverbindungen (beispielsweise Zinkoxid, Zinkstearat, Zink-di-toluolsulfinat, Zink-di-benzolsulfinat), Magnesiumoxid und/oder (modifizierten) Harnstoffen zum Einsatz kommen. Die Zinkverbindungen, insbesondere Zink-di-toluolsulfinat, sind erfindungsgemäß besonders bevorzugt.

Dabei spielt es erfindungsgemäß keine wesentliche Rolle, ob die Treibmittel bereits in aktivierter Form eingesetzt werden oder, ob die thermisch expandierbaren Zubereitungen zusätzlich zu dem Treibmittel einen entsprechenden Aktivator und/oder Beschleuniger, wie beispielsweise Zink-di-toluolsulfinat enthalten.

Es hat sich als besonders vorteilhaft erwiesen, wenn die erfindungsgemäßen thermisch expandierbaren Zubereitungen die Aktivatoren und/oder Beschleuniger, insbesondere die Zinkverbindungen, ganz besonders das Zink-di-Toluolsulfinat, in einer Menge von 0,2 bis 1,4Gew.-%, insbesondere von 0,5 bis 1,2Gew.-%, ganz besonders von 0,5 bis 0,85Gew.-%, bezogen auf die Gesamtmasse der thermisch expandierbaren Zubereitung enthalten.

Als physikalische Treibmittel werden vorzugsweise expandierbare Kunststoffmikrohohlkugeln auf der Basis von Polyvinylidenchloridcopolymeren oder Acrylnitril/(Meth)acrylat-Copolymeren eingesetzt. Diese sind beispielsweise unter den Namen "Dualite®" beziehungsweise "Expancel®" von den Firmen Pierce & Stevens beziehungsweise Akzo Nobel im Handel erhältlich.

Es kann erfindungsgemäß bevorzugt sein, in den thermisch expandierbaren Zubereitungen eine Kombination aus mindestens einem chemischen, thermisch aktivierbaren Treibmittel und mindestens einem physikalischen, thermisch aktivierbaren Treibmittel einzusetzen.

Die Menge an Treibmittel wählt man vorzugsweise so, dass sich das Volumen der thermisch expandierbaren Masse beim Erwärmen auf Aktivierungstemperatur (oder Expansionstemperatur) um mindestens 5 %, vorzugsweise mindestens 10 % und insbesondere mindestens 20 % irreversibel vergrößert. Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur um mindestens 5 %, vorzugsweise um mindestens 10 % und insbesondere mindestens 20 % größer ist als vor der Erwärmung. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergrößerung, kann man durch die Wahl der Menge des Treibmittels so einstellen, dass sie unter 300 %, insbesondere unter 200 % liegt.

Die Aktivierungstemperatur liegt vorzugsweise im Bereich von 120 bis 220 °C. Diese Temperatur soll vorzugsweise für eine Zeitdauer im Bereich von 10 bis 150 Minuten aufrecht gehalten werden.

Als fünfte wesentliche Komponente enthalten die erfindungsgemäßen bei Applikationstemperaturen unterhalb von 70°C pumpbaren, thermisch expandierbaren Zubereitungen mindestens 1Gew.-% organische Fasern mit einer Faserlänge von 0,2 bis 10mm.

Unter "organischen Fasern" werden dabei erfindungsgemäß alle Fasern verstanden, die überwiegend, dass heißt vorzugsweise zu mindestens 85Gew.-%, insbesondere zu mindestens 95Gew.-%, aus Molekülen bestehen, die der organischen Chemie zugerechnet werden. Kohlefasern zählen dabei explizit nicht zu den erfindungsgemäßen organischen Fasern.

Überraschenderweise wurde im Rahmen der dieser Anmeldung zugrunde liegenden Arbeiten gefunden, dass herkömmlicher Weise verwendete Fasern, wie beispielsweise Glasfasern, nicht zu pumbaren, thermisch expandierbaren Zubereitungen mit den gewünschten thixotropen Eigenschaften führen und im Vergleich zu den erfindungsgemäßen Zubereitungen auf Basis organischer Fasern, insbesondere den Polyaramidfasern, deutlich schlechtere Standfestigkeiten aufweisen.

Erfindungsgemäß bevorzugte organische Fasern sind beispielsweise Polyamidfasern oder Polyesterfasern; aber auch natürliche Fasern, wie beispielsweise Cellulosefasern, Jutefasern oder Hanffasern sind erfindungsgemäß bevorzugt.

Dabei hat es sich erfindungsgemäß als bevorzugt erwiesen, wenn organische Fasern zum Einsatz kommen, die einen Schmelzpunkt von mindestens 130°C aufweisen. Organische Fasern mit einem Schmelzpunkt oberhalb der Härtungstemperatur der erfindungsgemäßen Zubereitungen, insbesondere oberhalb von 150°C, ganz besonders oberhalb von 180°C können erfindungsgemäß besonders bevorzugt sein.

Erfindungsgemäß besonders vorteilhafte Eigenschaften weisen thermisch expandierbare Zubereitungen auf, die Polyamidfasern enthalten.

Polyamidfasern, die sich von einem primären Amin, insbesondere einem aromatischen primären Amin ableiten, sind erfindungsgemäß bevorzugt. Polyamidfasern, deren Amin-basierte Wiederholungseinheiten sich von p-Phenylendiamin und/oder m-Phenylendiamin ableiten, sind besonders bevorzugt. p-Phenylendiamin ist ganz besonders bevorzugt.

Polyamidfasern, die sich von aromatischen Carbonsäuren ableiten, sind erfindungsgemäß ebenfalls bevorzugt. Derartig erfindungsgemäß bevorzugte aromatische Carbonsäuren sind beispielsweise die Phthalsäure, die Isophthalsäure und die Terephthalsäure. Die Terephthalsäure ist erfindungsgemäß ganz besonders bevorzugt.

Polyamidfasern, bei denen mindestens 80% der Amidgruppen direkt an zwei aromatische Ringe gebunden sind, die so genannten Polyaramidfasern, sind erfindungsgemäß ganz besonders bevorzugt. Erfindungsgemäß äußerst vorteilhafte organische Fasern werden beispielsweise von der Firma Dupont unter den Handelsbezeichnungen Kevlar® 1F561, Kevlar® 1F1464 sowie Kevlar® 1F107 vertrieben.

Die thermisch expandierbaren Zubereitungen enthalten die organischen Fasern, insbesondere die Polyaramidfasern, vorzugsweise in einer Menge von 1 bis 10 Gew.-%, insbesondere 1,5 bis 5,5 Gew.-% bezogen auf die gesamte Zubereitung.

In einer besonderen Ausführungsform der vorliegenden Erfindung hat es sich erfindungsgemäß als besonders vorteilhaft erwiesen, wenn die thermisch expandierbare Zubereitung weniger als 1,5Gew.-%, vorzugsweise weniger als 0,5Gew.-%, bezogen auf die gesamte Anwendungszubereitung eines bei 25°C festen Epoxidharzes enthält. Durch diese Maßnahme lässt sich das Fließverhalten der thermisch expandierbaren Zubereitung vor dem Einsetzen der Härtung besonders gut optimieren.

Ein Epoxidharz wird erfindungsgemäß als "fest" bezeichnet, wenn sich die Geometrie des ungehärteten Rohstoffs bei der angegebenen Temperatur innerhalb von 1 Stunde, insbesondere innerhalb von 24 Stunden, nicht unter dem Einfluss der Schwerkraft verformt.

Weiterhin hat es sich als vorteilhaft erwiesen, wenn die erfindungsgemäßen, thermisch expandierbaren Zubereitungen mindestens 20Gew.-%, insbesondere mindestens 30Gew.-%, Füllstoffe, jeweils bezogen auf die gesamte Anwendungszubereitung, enthält.

Dabei hat es sich als erfindungsgemäß bevorzugt erwiesen, wenn zwei oder mehr verschiedene Füllstoffe enthalten sind.

In einer ersten bevorzugten Ausführungsform enthalten die thermisch expandierbaren Zubereitungen als Füllstoff mindestens einen Leichtfüllstoff. Leichtfüllstoffe zeichnen sich erfindungsgemäß dadurch aus, dass sie eine geringere Dichte aufweisen als die anwendungsbereite Zubereitung, die sie umgibt; somit reduziert der Einsatz von Leichtfüllstoffen die Dichte der Gesamtzubereitung.

Derartige Leichtfüllstoffe können ausgewählt werden aus der Gruppe der Metallhohlkugeln wie beispielsweise Stahlhohlkugeln, Glashohlkugeln, Flugasche (Fillite), Kunststoffhohlkugeln auf der Basis von Phenolharzen, Epoxidharzen oder Polyestern, expandierten Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramischen Hohlkugeln oder organischen Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln ausgewählt, die der ausgehärteten Zubereitung eine hohe Druckfestigkeit verleihen. Glashohlkugeln sind erfindungsgemäß besonders bevorzugt, da diese neben der Gewichtsreduzierung der Zubereitungen eine hohe Druckfestigkeit der ausgehärteten Systeme ermöglichen und darüber hinaus einer Überhitzung der Systeme während des Aushärtungsprozesses durch die entstehende Reaktionsexothermie entgegenwirken.

Leichtfüllstoffe sind in den thermisch expandierbaren Zubereitungen vorzugsweise in einer Menge von 2 bis 20Gew.-%, insbesondere von 5 bis 16Gew.-%, bezogen auf die gesamte thermisch expandierbare Zubereitung enthalten.

Weiterhin hat es sich als vorteilhaft erwiesen, wenn die thermisch expandierbare Zubereitung als weiteren Füllstoff mindestens einen anorganischen Füllstoff enthält.

Als anorganische Füllstoffe kommen beispielsweise die diversen gemahlenen oder gefällten Kreiden, Ruß, Calcium-Magnesiumcarbonate, Talkum, Graphit, Schwerspat, Siliziumdioxid sowie insbesondere silikatische Füllstoffe vom Typ des Aluminium-Magnesium-Calcium-Silicats, beispielsweise Wollastonit oder Chlorit in Frage. Kreiden sind erfindungsgemäß bevorzugt; ganz besonders bevorzugt sind gemahlene mineralische Kreiden.

Die anorganischen Füllstoffe, insbesondere die Kreide und/oder das Siliziumdioxid, werden vorzugsweise in einer Menge von 1 bis 40Gew.-%, insbesondere von 10 bis 35Gew.-%, jeweils bezogen auf die Masse der gesamten pumpbaren, thermisch expandierbaren Zubereitung eingesetzt.

Der Begriff "Siliziumdioxid" umfasst erfindungsgemäß auch die als "Kieselsäure" oder angelsächsisch als "silica" bezeichneten Oxidformen des Siliciums.

Es ist erfindungsgemäß bevorzugt, wenn die Zubereitung mindestens ein oberflächenmodifiziertes Siliziumdioxid enthält; besonders vorteilhafte Eigenschaften als oberflächenmodifiziertes Siliziumdioxid weisen hydrophobisch modifizierte Siliziumdioxide auf.

Besonders bevorzugt sind erfindungsgemäß oberflächenmodifizierte Siliziumdioxidtypen mit einer spezifischen Oberfläche von mindestens 100m²/g, insbesondere von mindestens 150m²/g (jeweils gemessen nach der BET-Methode), da sich gezeigt hat, dass diese die Homogenität der thermisch expandierbaren Zubereitung, insbesondere während des Aufheizens deutlich verbessern und somit einer ansonsten gelegentlich beobachteten Abscheidung der Epoxidharze entgegenwirken.

Ein Gehalt von 0 bis 5Gew.-%, insbesondere 0,1 bis 4Gew.-%, ganz besonders 0,5 bis 3Gew.-% oberflächenmodifiziertes Siliziumdioxid bezogen auf die gesamte pumpbare, thermisch expandierbare Zubereitung ist besonders bevorzugt.

Es hat sich erfindungsgemäß als besonders vorteilhaft erwiesen, wenn die thermisch expandierbaren Zubereitungen Kreide und oberflächenmodifiziertes Siliziumdioxid enthalten.

Ferner hat es sich erfindungsgemäß als bevorzugt erwiesen, wenn die thermisch expandierbaren Zubereitungen nach ihrer Applikation, insbesondere in einem Zeitfenster von mindestens 5 Minuten nach der Applikation, pastenförmig sind. Es ist erfindungsgemäß besonders bevorzugt, wenn die Zubereitungen nach ihrer Applikation standfest sind. Unter "standfest" wird erfindungsgemäß vorzugsweise verstanden, dass die Zubereitungen, wenn sie auf einer senkrecht stehenden Stahlplatte in Form einer Raupe vertikal zum Boden appliziert werden und dort für 30 Minuten bei 120°C belassen werden, ihre ursprüngliche Lage unter dem Einfluss der Schwerkraft um höchstens 3mm verändern. Die Klebstoffraupe wird dabei vorzugsweise mittels einer Dreiecksdüse mit einer Höhe von 13mm und einer Breite von 8mm appliziert.

In einer weiteren Ausführungsform der vorliegenden Erfindung hat es sich als vorteilhaft, insbesondere im Hinblick auf die mechanischen Eigenschaften der ausgehärteten Zubereitung, erwiesen, wenn die pumpbare, thermisch expandierbare Zubereitung weiterhin einen oder mehrere verschiedene Schlagzähigkeitsmodifikatoren enthält.

Derartige Schlagzähigkeitsmodifikatoren können beispielsweise ausgewählt sein aus: thermoplastischen Isocyanaten oder Polyurethanen, Kautschuk-Partikeln, insbesondere solchen mit Kern-Schale-Struktur, und Block-Copolymeren, insbesondere solchen, die einen ersten Polymerblock mit einer Glasübergangstemperatur von unterhalb 15 °C und einen zweiten Polymerblock mit einer Glasübergangstemperatur von oberhalb 25 °C enthalten.

Derartige Block-Copolymere sind vorzugsweise ausgewählt aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block. Spezielle Beispiele hierfür sind Block-Copolymere mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat.

Erfindungsgemäß bevorzugte Schlagzähigkeitsmodifikatoren sind weiterhin Kautschuk-Partikel mit Kern-Schale-Struktur, die einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem Dien-Homopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale kovalent vernetzt sein, indem man Monomere einsetzt, die zwei oder mehr Doppelbindungen pro Molekül aufweisen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kerne-Schale-Partikel so aufgebaut, dass der Kern 50 bis 95 Gew.-% des Kerne-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kerne-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kerne-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kerne-Schale-Partikel werden in diesem Dokument im letzten Absatz der Seite 6 bis zum ersten Absatz der Seite 7 aufgeführt. Auf diese Bezugsquellen wird hiermit explizit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kerne-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Dieselbe Funktion wie die vorstehend genannten Kautschuk-Partikel mit Kern-Schale-Struktur können anorganische Partikel übernehmen, die eine Hülle aus organischen Polymeren aufweisen.

In dieser Ausführungsform enthält die erfindungsgemäße thermisch expandierbare Zubereitung vorzugsweise anorganische Partikel, die eine Hülle aus organischen Polymeren aufweisen, wobei die organischen Polymere ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Die Acrylsäure- und/oder Methacrylsäureester stellen vorzugsweise Methyl- und/oder Ethylester dar, wobei besonders bevorzugt mindestens ein Anteil der Ester als Methylester vorliegt. Zusätzlich können die Polymere auch unveresterte Acryl- und/oder Methacrylsäure enthalten, was die Anbindung der organischen Polymere an die Oberfläche der anorganischen Partikel verbessern kann. Daher ist es in diesem Fall besonders bevorzugt, wenn die Monomereinheiten aus unveresterter Acryl- und/oder Methacylsäure (nahe) an demjenigen Ende der Polymerkette liegen, das sich an die Oberfläche der anorganischen Partikel bindet.

Dabei ist es bevorzugt, dass die organischen Polymere zu mindestens 80 Gew.-% aus Acrylsäure- und/oder Methacrylsäureester bestehen. Insbesondere können sie zu 90 Gew.-%, 95 Gew-% oder vollständig hieraus bestehen. Sofern die organischen Polymere andere Monomere als diese Acrylsäure- und/oder Methacrylsäureester bzw. unveresterte Acrylsäure- und/oder Methacrylsäure enthalten, sind diese vorzugsweise ausgewählt aus Comonomeren, die Epoxy- Hydroxy- und/oder Carboxyl-Gruppen aufweisen.

Die organischen Polymere der Hülle sind vorzugsweise unvernetzt oder so schwach vernetzt, dass nicht mehr als 5 % an Monomer-Einheiten einer Kette mit Monomer-Einheiten einer anderen Kette vernetzt sind. Dabei kann es vorteilhaft sein, dass die Polymere in der Nähe der Oberfläche der anorganischen Partikel stärker vernetzt sind als weiter außen in der Hülle. Insbesondere ist die Hülle vorzugsweise so aufgebaut, dass mindestens 80 %, insbesondere mindestens 90 % und besonders bevorzugt mindestens 95 % der Polymerketten mit einem Ende an die Oberfläche der anorganischen Partikel angebunden sind.

Die anorganischen Partikel weisen vor dem Aufbringen der Hülle aus organischen Polymeren vorzugsweise eine mittlere Teilchengröße im Bereich von 1 bis 1000nm, insbesondere im Bereich von 5 bis 30 nm auf. Bekanntermaßen ist die Teilchengröße durch Lichtstreumethoden sowie elektronenmikroskopisch bestimmbar.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.-% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder -hydroxide sowie SiO₂ bzw. die als "Kieselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1 469 020 A1 beschriebenen Herstellungsweise verfahren, wobei man als organische Beschichtungskomponente für die Partikel Monomere oder Prepolymere des Hüllmaterials einsetzt. Weiterhin ist eine Herstellung der umhüllten Partikel durch "atom transfer radical polymerization" möglich, wie es beispielhaft für die Polymerisation von n-Butylacrylat auf Kieselsäure-Nanopartikel beschrieben wurde in: G. Carrot, S. Diamanti, M. Manuszak, B. Charleux, J.-P. Vairon: "Atom Transfer Radical Polymerization of n-Butyl Acrylate from Silica Nanoparticles", J. Polym. Sci., Part A: Polymer Chemistry, Vol. 39, 4294-4301 (2001).

Weiterhin kann auf Herstellverfahren zurückgegriffen werden, wie sie in der WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Dabei kann auch dem Vorschlag dieses Dokuments gefolgt werden (Seite 15, Zeilen 9 bis 24), die anorganischen Kerne vor der Aufpolymerisation des Mantels einer Vorbehandlung zu unterziehen. Hierzu heißt es an der genannten Stelle:
"Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppen-tragenden Oberflächen mit Polymeren ist beispielsweise aus EP-A-337 144 bekannt".

Eine weitere Gruppe bevorzugter Schlagzähigkeitsmodifikatoren sind geeignete Block-Copolymere. Diese werden vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten. Weiterhin sind solche Block-Copolymere geeignet, die ausgewählt sind aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

Beispielsweise wird das Block-Copolymer ausgewählt aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, (Meth)Acrylsäureester- Butylacrylat-(Meth)Acrylsäureester, vorzugsweise Methylmethacrylat-Butylacrylat-Methylmethacrylat

Die vorstehend genannten Block-Copolymere entsprechen denjenigen, die auch im Rahmen der bereits zitierten WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden. Dort finden sich auch Querverweise auf Dokumente, in denen die Herstellung solcher Block-Copolymere beschrieben ist.

Vorstehend wird die Zusammensetzung dieser Block-Copolymere dadurch definiert, dass für jeden Block die Monomer-Einheit angegeben ist. Dies ist so zu verstehen, dass das Block-Copolymer jeweils Polymerblöcke aus den genannten Monomeren enthält. Dabei können bei den einzelnen Polymerblöcken bis zu 20 mol/% der genannten Monomere durch andere Co-Monomere ersetzt werden. Insbesondere gilt dies für Blöcke aus Poly-Methylmethacrylat.

Die genannten Block-Copolymere verbessern die Schlagzähigkeit der ausgehärteten erfindungsgemäßen Massen, insbesondere bei Temperaturen unterhalb von 0°C.

Die Schlagzähigkeitsmodifikatoren sind in den erfindungsgemäßen Zubereitungen vorzugsweise in Mengen von 0 bis 20Gew.-%, vorzugsweise 5 bis 15Gew.-% (berechnet als Aktivsubstanzgehalt des Schlagzähigkeitsmodifikators) bezogen auf die gesamte Anwendungszubereitung enthalten.

In einer weiteren bevorzugten Ausführungsform enthalten die erfindungsgemäßen Zubereitungen mindestens ein Flammschutzmittel. Durch den Einsatz der Flammschutzmittel ist es möglich, die erfindungsgemäßen Zubereitungen zur Versteifung und/oder Verstärkung im Bereich von Fahrgastzellen einzusetzen und gleichzeitig die Brandgefahr in diesen Bereichen zu reduzieren.

Das Flammschutzmittel wird vorzugsweise ausgewählt aus der Gruppe der halogenierten (insbesondere bromierten) Ether vom Typ "Ixol" der Fa. Solvay, bromierten Alkohole, insbesondere Dibromneopentylalkohol, Tribromneopentylalkohol und PHT-4-Diol (1,2-Benzendicarboxylsäure, 3,4,5,6-Tetrabrom-,2-(2-hydroxyethoxy)ethyl-2-hydroxypropylester), organischen Phosphate, insbesondere Diethyl-ethanphosphonat (DEEP), Triethylphosphat (TEP), Dimethylpropyl-phosphonat (DMPP), Diphenylkresylphosphat (DPK), sowie chlorierten Phosphate (beispielsweise Tris(1-methyl-2-chloroethyl)phosphat (TMCP), Fa. Albemarle), insbesondere Tris-(2-chlorethyl)phosphat, Tris-(2-chloriso-propyl)-phosphat (TCPP), Tris(1,3-dichlorisopropyl)phosphat, Tris-(2,3-dibrompropyl)phosphat und Tetrakis-(2-chlorethyl)-ethylendiphosphat oder deren Mischungen.

Weitere erfindungsgemäß bevorzugte Flammschutzmittel sind elementarer roter Phosphor, Polyphosphatverbindungen, wie beispielsweise Melaminpolyphosphat und/oder Ammoniumpolyphosphat, Aluminiumtrihydrat (ATH), "Blähgraphite" sowie Dihydrooxaphosphaphenantrenoxid (DOPO).

Vorzugsweise enthält die erfindungsgemäße Zubereitung das Flammschutzmittel in einer Menge von 1 bis 65 Gew.-%, besonders bevorzugt von 1 bis 30 Gew.-%, bezogen auf die gesamte pumpbare, thermisch expandierbare Zubereitung. Besonders bevorzugt sind Gehalte von Flammschutzmitteln im Bereich von 5 bis 25 Gew.-%, insbesondere von 15 bis 20 Gew.-%, bezogen auf die gesamte pumpbare, thermisch expandierbare Zubereitung.

Die erfindungsgemäßen thermisch expandierbaren Zubereitungen können durch Mischung der ausgewählten Komponenten in einem beliebigen, geeigneten Mischer, wie beispielsweise einem Dispersionsmischer, einem Planetenmischen, einem Doppelschneckenmischer, einem kontinuierlichen Mischer oder einem Extruder, insbesondere einem Doppelschneckenextruder, hergestellt werden.

Obwohl es vorteilhaft sein kann, die Komponenten etwas zu erhitzen, um die Erreichung einer homogenen, einheitlichen Masse zu erleichtern, muss dafür Sorge getragen werden, dass keine Temperaturen erreicht werden, die eine Aktivierung des thermisch aktivierbaren Härters und/oder des thermisch aktivierbaren Treibmittels bewirken.

Die Lagerung der erfindungsgemäßen Zubereitungen bis zur Anwendung erfolgt vorzugsweise in Düsenkartuschen oder Fässern, wie beispielsweise Hobbocks.

Zum Zeitpunkt der Anwendung wird die erfindungsgemäße Zubereitung mit herkömmlichen, beheizten Pumpen aus dem Lagerbehältnis zum Ort der Anwendung transportiert und dort appliziert. Ein Auftrag bis zu einer Schichtdicke von 5cm ist dabei problemlos möglich, so dass auch größere Hohlräume, beispielsweise Rohre mit einem entsprechenden Innendurchmesser, ohne weiteres gefüllt werden können.

Die Expansion der applizierten thermisch expandierbaren Zubereitung erfolgt durch Erhitzung, wobei die Zubereitung für eine bestimmte Zeit auf eine bestimmte Temperatur erhitzt wird, die ausreichend ist, um die Aktivierung des Treibmittel sowie des Härters zu bewirken.

In Abhängigkeit von der Zusammensetzung der Zubereitung und den Bedingungen der Fertigungslinie liegen derartige Temperaturen üblicherweise im Bereich von 130°C bis 240°C, vorzugsweise 150°C bis 200°C, mit einer Verweilzeit von 10 bis 90 Minuten, vorzugsweise von 15 bis 60 Minuten.

Die Art der Wärmequelle spielt prinzipiell keine Rolle, so kann die Wärmezufuhr beispielsweise durch ein Heißluftgebläse, durch Bestrahlung mit Mikrowellen, durch magnetische Induktion oder auch durch Heizzangen erfolgen. Im Bereich des Fahrzeugbaus sowie in Technologiefeldern mit verwandten Herstellprozessen ist es besonders vorteilhaft, wenn die Expansion der erfindungsgemäßen Zubereitungen während der Passage des Bauteils beziehungsweise des Fahrzeugs durch den Ofen zur Aushärtung der kathodischen Tauchlackierung oder zum Einbrennen der Pulverlackbeschichtungen erfolgt, so dass auf einen separaten Erhitzungsschritt verzichtet werden kann.

Erfindungsgemäß können solche Zubereitungen bevorzugt sein, die eine Härtungsexothermie von weniger als 300J/g, insbesondere weniger als 250J/g, ganz besonders weniger als 220J/g aufweisen. Die Härtungsexothermie wird erfindungsgemäß mittels DSC-Messung in einem Temperaturbereich von 25°C bis 250°C mit einer Heizrate von 5K/min bestimmt.

Ein zweiter Gegenstand der vorliegenden Erfindung ist ein Verfahren zum Versteifen und/oder Verstärken von Bauteilen mit dünnwandigen Strukturen, insbesondere von rohrförmigen Strukturen, bei dem eine erfindungsgemäße bei Applikationstemperaturen unterhalb von 70°C pumpbare, thermisch expandierbare Zubereitung bei einer Temperatur unterhalb von 70°C auf die Oberfläche der zu verstärkenden Struktur mit einem Pumpendruck von weniger als 200bar aufgebracht wird, und diese Zubereitung zu einem späteren Zeitpunkt bei Temperaturen oberhalb von 130°C ausgehärtet wird.

Ein Aufbringen der Zubereitungen in einem Temperaturbereich von 50°C bis 60°C ist dabei erfindungsgemäß besonders bevorzugt.

Weiterhin besonders bevorzugt ist eine Applikation bei einem Applikationsdruck von 6bar bis 180bar.

Die eigentliche Härtung findet erfindungsgemäß zu einem "späteren Zeitpunkt" statt. So ist es beispielsweise erfindungsgemäß denkbar, dass die zu versteifenden Bauteile mit den pumpbaren, thermisch expandierbaren Zubereitungen beschichtet und anschließend zwischengelagert werden. Dabei kann die Zwischenlagerung beispielsweise auch den Transport zu einem anderen Werk umfassen. Eine derartige Zwischenlagerung kann bis zu einigen Wochen dauern.

In einer anderen Ausführungsform ist es aber auch denkbar, dass die zu versteifenden Bauteile kurz nach der Beschichtung mit der pumpbaren, thermisch expandierbaren Zubereitung einem Härtungsschritt unterzogen werden. Dies kann unmittelbar oder bei einer Fließbandproduktion nach Erreichen einer der folgenden Stationen erfolgen. Es ist im Rahmen dieser Ausführungsform erfindungsgemäß besonders bevorzugt, wenn der Aushärtungsschritt innerhalb von 24h, insbesondere innerhalb von 3h, nach dem Auftrag der erfindungsgemäßen Zubereitungen erfolgt.

Die erfindungsgemäßen pumpbaren, thermisch aktivierbaren Schäume können in allen Produkten zum Einsatz kommen, die Hohlräume oder zu verstärkende Rohrkonstruktionen aufweisen. Dies sind neben den Fahrzeugen beispielsweise Flugzeuge, Haushaltsgeräte, Möbel, Gebäude, Wände, Abtrennungen, oder Boote sowie alle Vorrichtungen, die eine tragende Rahmenkonstruktion aus Rohren aufweisen, wie beispielsweise Sportgeräte, Mobilitätshilfsmittel, Gestelle und Fahrräder.

Beispiele für Sportgeräte, bei denen die vorliegende Erfindung vorteilhaft verwendet werden kann, sind Fahrräder, Angelnetze, Angelruten, Torpfosten, Tennisnetzpfosten sowie Basketballkorbkonstruktionen.

Unter dem Begriff "Fahrrad" sind erfindungsgemäß alle zumeist zweirädrigen, einspurigen Fahrzeuge zu verstehen, die durch das Treten von Pedalen angetrieben werden.

Neben den herkömmlichen Fahrradkonstruktionen, bei denen der Fahrer eine sitzende Position einnimmt, sollen erfindungsgemäß beispielsweise auch Liegeräder mit umfasst sein. Neben den herkömmlichen festen Rahmen sind auch Konstruktionen mit Gelenken, wie beispielsweise Falträder erfindungsgemäß umfasst. Zudem sollen auch drei- oder mehrrädrige Fahrzeuge mit umfasst sein.

Die erfindungsgemäßen Zubereitungen können beispielsweise die Bestandteile eines Diamantrahmens, eines Slopingrahmens, eines Fachwerkrahmens, eines Kreuzrahmens, eines Trapezrahmens, eines Anglaiserahmens, eines Schwanenhalsrahmens, eines Waverahmens, eines Easy-boarding-Rahmens oder eines Y-Rahmen verstärken.

Weiterhin können die erfindungsgemäßen Zubereitungen eingesetzt werden, um die Rahmenkonstruktionen von Mobilitätshilfsmittel, wie beispielsweise Rollstühle, Rollatoren, Gehstützen, Krankenstöcken oder Gehböcken, zu verstärken.

Im Bereich des Fahrzeugbaus hat sich der Einsatz der erfindungsgemäßen Zubereitungen insbesondere im Bereich der Konstruktion des Fahrersicherheitskäfigs beziehungsweise der Fahrgastzelle als vorteilhaft erwiesen, da dadurch der Konstruktion eine enorme Stabilität bei gleichzeitig geringem Gewicht verliehen werden kann. Insbesondere bei der Konstruktion von Rennwagen aller Klassen (Formel I, Tourenwagen, Rallye-Fahrzeugen etc.) kann die erfindungsgemäße Zubereitung vorteilhaft eingesetzt werden.

Ein weiteres bevorzugtes Anwendungsgebiet der vorliegenden Erfindung ist der Bereich der Werkzeuge. Hinsichtlich der Art der Werkzeuge bestehen keine prinzipiellen Beschränkungen. So kann es sich beispielsweise um Handwerkergeräte, Fachwerkzeuge, Gartengeräte, wie beispielsweise Spaten oder Schubkarren, oder auch Küchengeräte handeln. Allen diesen Bauteilen ist gemeinsam, dass die erfindungsgemäße Zubereitung eine Stabilisierung der Konstruktion ermöglicht, ohne dabei das Gesamtgewicht wesentlich zu erhöhen.

Weiterhin können die erfindungsgemäßen Zubereitungen vorteilhaft zur Stabilisierung von Rahmen eingesetzt werden. Unter "Rahmen" werden erfindungsgemäß seitlichen Einfassungen, wie beispielsweise Bilderrahmen, Fensterrahmen oder auch Türrahmen verstanden.

Ein weiteres Anwendungsgebiet ist die Verstärkung von Gestellen aller Arten. Auch in diesem Anwendungsgebiet steht die hohe Stabilität der entsprechend verstärkten Konstruktionen im Vordergrund. Zu den Gestellen, bei denen die erfindungsgemäße Zubereitung eingesetzt werden kann, zählen beispielsweise Leitern jeder Art, aber auch Baustellengerüste, Gerüste für den Messebau, Konstruktionen für Konzertbühnen wie beispielsweise als Traversen eingesetzte Trage- und Aufbaukonstruktionen sowie Lichtmasten für Stadien oder Zuschauertribünen.

Ein weiteres umfassendes Anwendungsgebiet ist der Bereich der Straßenausstattung. In diesen Bereich fallen neben Ampel- und Lichtanlagen auch alle weiteren Konstruktionen, wie beispielsweise Wartehäuser, Bahnsteiggeländer, Sitzkonstruktionen, Straßenschilder, Fahrradständer oder auch Leitplanken.

Bezüglich der weiteren Details dieses Gegenstandes der vorliegenden Erfindung gilt mutatis mutandis das zu dem ersten Gegenstand bereits Gesagte.

Ein dritter Gegenstand der vorliegenden Erfindung ist die Verwendung von einer erfindungsgemäßen bei Applikationstemperaturen unterhalb von 70°C pumpbaren, thermisch expandierbaren Zubereitung zur Versteifung und/oder Verstärkung von Bauteilen mit dünnwandigen Strukturen, insbesondere von rohrförmigen Strukturen.

Bezüglich der Details dieses Gegenstandes der vorliegenden Erfindung gilt mutatis mutandis das zu den anderen Gegenständen bereits Gesagte.

Ein vierter Gegenstand der vorliegenden Erfindung ist ein Bauteil mit dünnwandiger Struktur, das mit einer erfindungsgemäßen bei Applikationstemperaturen unterhalb von 70°C pumpbaren, thermisch expandierbaren Zubereitung durch Aushärtung, versteift und/oder verstärkt wurde.

Auch bei diesem Gegenstand der Erfindung gilt bezüglich der Details mutatis mutandis das zu den anderen Gegenständen bereits Gesagte.

### Ausführungsbeispiele

### 1 Herstellung der Rezepturen

Es wurden die folgenden thermisch expandierbaren Zubereitungen hergestellt.

Die Mengenangaben verstehen sich, sofern nichts anderes vermerkt ist, in Gewichtsprozent.

**Tabelle 1:**

| Rohstoff | Formulierung | | | | | |
|---|---|---|---|---|---|---|
| | F1 | F2 | F3 | F4 | F5 | F6 |
| DER® 331 | 5,0 | 25,0 | 25,0 | 50,0 | 25,0 | 25,0 |
| DER® 736 | 25,0 | 10,0 | -- | -- | -- | -- |
| Präpolymer A | 20,0 | -- | 10,0 | 10,0 | 20,0 | 10,0 |
| DER® 732 | -- | 10,0 | -- | -- | -- | -- |
| Thioplast® EPS-25 | -- | 10,0 | -- | -- | -- | -- |
| Adeka® QR-9466 | 5,0 | 5,8 | -- | -- | 12,0 | -- |
| Flexibilizer® DY-965 | 5,0 | -- | 15,0 | -- | -- | 13,1 |
| Kevlar® 1F561 | -- | -- | 5,0 | -- | 7,0 | 1,5 |
| Kevlar® 1F1464 | -- | 5,0 | -- | 7,0 | -- | -- |
| Kevlar® 1F107 | 2,5 | -- | -- | -- | -- | -- |
| Omyacarb® 4HD | 15,0 | 11,0 | 23,5 | 13,7 | 14,0 | 34,0 |
| 3M GB® VS5500 | 15,0 | 15,0 | 15,0 | 10,0 | 15,0 | 10,0 |
| Cab-o-Sil® TS720 | 2,0 | 2,0 | 2,0 | 2,0 | 2,0 | 2,0 |
| Dyhard® 100SH | 4,2 | 4,9 | 3,2 | 6,0 | 3,7 | 3,1 |
| Fenuron | 0,3 | 0,3 | 0,3 | 0,3 | 0,3 | 0,3 |
| Expancel® 909 DU80 | 1,0 | 1,0 | 1,0 | 1,0 | 1,0 | 1,0 |
| Gesamt | 100,0 | 100,0 | 100,0 | 100,0 | 100,0 | 100,0 |

Weiterhin wurde die folgende erfindungsgemäße, thermisch expandierbare Zubereitung hergestellt, die zusätzlich Flammschutzmittel enthält:

| Rezeptur F7 | Menge [Gew.-%] |
|---|---|
| DER® 331 | 37,7 |
| Präpolymer A | 14,0 |
| Exolit® OP930 | 10,0 |
| Exolit® AP422 | 4,0 |
| Exolit® RP6500 | 2,0 |
| Martinal® ON313 | 14,0 |
| 3M GB VS5500 | 7,5 |
| Kevlar® 1F1464 | 2,5 |
| Cab-o-Sil® TS-720 | 2,0 |
| Dyhard® 100SH | 5,0 |
| Fenuron | 0,3 |
| Expancel® 909 DU80 | 1,0 |
| Gesamt | 100,0 |

### 2 Verzeichnis der eingesetzten Handelsprodukte

- 3M GB® VS5500: Glashohlkugeln; Hersteller 3M; Dichte 0,38 g/cm³
- Adeka® QR-9466: modifiziertes Polyurethanharz; Hersteller Adeka
- Cab-o-sil® TS-720: Siliziumdioxid, pyrogene amorphe Kieselsäure, Hersteller Cabot
- DER® 331: Reaktionsprodukt von Bisphenol A mit Epichlorhydrin; EEW ca. 187g/eq; Viskosität bei 25°C 12,5Pa*s; Hersteller Dow
- DER® 732: Reaktionsprodukt von Epichlorhydrin mit Polypropylenglykol; EEW ca. 320g/eq; Viskosität bei 25°C 0,034Pa*s; Hersteller Dow
- DER® 736: Reaktionsprodukt von Epichlorhydrin mit Polypropylenglykol; EEW ca. 190g/eq; Viskosität bei 25°C 0,079Pa*s; Hersteller Dow
- Dyhard® 100SH: 1-Cyanguanidine; ca. 94,8% Reinheit; HerstellerEvonik Degussa
- Exolit® AP422: Ammoniumpolyphosphat; Hersteller Clariant
- Exolit® OP930: Phosphororganisches Salz ; Hersteller Clariant
- Exolit® RP6500: mikroverkapselter roter Phosphor (ca. 43 - 47Gew.-%) in Epoxidharz (ca. 52 - 57Gew.-%); Hersteller Clariant
- Expancel® 909 DU80: expandierbare Mikrohohlkugeln aus Acrylonitril, Methacrylonitril und Methylmethacrylatcopolymeren; Hersteller Expancel
- Flexibilizer® DY-965: Reaktiver Schlagzähigkeitsmodifikator für Epoxidharze; Hersteller Huntsman
- Kevlar® 1F107: Kevlar-Fasern mit einer nominalen Länge von 6,4mm; Hersteller DuPont
- Kevlar® 1F1464: Kevlar-Fasern mit einer nominalen Länge von 2,7mm; Hersteller DuPont
- Kevlar® 1F561: Kevlar-Fasern mit einer nominalen Länge von 1,5mm; Hersteller DuPont
- Martinal® ON313: Aluminiumhydroxid (Reinheit 99,6%; Teilchengröße 11-15µ); Hersteller Albemarle
- Omyacarb® 4HD: Calcium Carbonat; Kalksteinmehl; Hersteller Omya GmbH
- Präpolymer A: Reaktionsprodukt von Bisphenol A-diglycidylether und Alkylpolyoxyalkylenamin; EEW ca. 450g/eq; Viskosität bei 25°C: 160Pa*s;
- Thioplast® EPS-25: Epoxy-terminiertes, aliphatisches Polysulfid; EEW ca. 550g/eq; Viskosität bei 25°C 2,8Pa*s; Hersteller Akzo Nobel

Zur Herstellung der Zubereitungen wurden die Harze jeweils in einem ungeheizten Planetenmischwerk vorgelegt und für mindestens 20min bei einem Vakuum von kleiner 100mbar mit einer Mischgeschwindigkeit von 100U/min homogenisiert. Anschließend wurden schrittweise die Füllstoffe zugegeben und die resultierenden Mischungen jeweils bei max. 50U/min gemischt bis homogene Massen vorlagen. Danach wurden die Mischungen weitere 20min bei einem Vakuum von kleiner 100mbar mit einer Mischgeschwindigkeit von 100U/min homogenisiert. Anschließend wurden die übrigen Rohstoffe zu den Formulierungen gegeben und bei max. 50U/min gemischt bis homogene Massen vorlagen. Zuletzt wurden die Mischungen für weitere 10min bei einem Vakuum von kleiner 100mbar mit einer Mischgeschwindigkeit von 100U/min homogenisiert und in Kartuschen abgefüllt. Während der gesamten Misch- und Homogenisierungsprozesse wurde dabei darauf geachtet, dass die Zubereitung durch auftretende Mischungswärme nicht wärmer als 60°C wurde.

### 3 Bestimmung der Eigenschaften der Zubereitungen

### 3.1 Bestimmung des Flusses

Zur Bestimmung des Flusses wurden jeweils 310ml der Zubereitungen gemäß Tabelle 1 in Aluminiumkartuschen mit einem Fassungsvolumen von 310ml und einem Innendurchmesser von 46mm gefüllt und dort für 45 Minuten bei 60°C vortemperiert. Danach wurden die Zubereitungen jeweils bei einer Temperatur von 60°C mit einem Druck von 6 bar durch die Austrittsöffnung der Kartusche, die mit einem Kartuschenanstecher (Dorn) mit einem Außendurchmesser von 9,0mm erzeugt wurde, ohne Verwendung einer Düse ausgebracht. Das Messintervall wurde dabei jeweils in Abhängigkeit vom Fluss des zu messenden Systems gewählt. So wurde bei Zubereitungen mit einem Fluss von mindestens 1000g/min jeweils die gesamte Kartusche geleert und die dafür benötigte Zeit bestimmt; bei sehr hohen Flüssen waren die Kartuschen dabei derart schnell geleert, dass nur ein ungefährer Wert ermittelt werden konnte. Bei Zubereitungen mit einem Fluss unterhalb von 1000g/min wurde ein Messintervall von jeweils 15 Sekunden gewählt.

### 3.2 Bestimmung der Zugscherfestigkeit

Die erfindungsgemäßen Zubereitungen wurden aus den Kartuschen auf unbehandelte, mit Ethylacetat gereinigte Stahlbleche (Qualität DC05; Schichtdicke 1,5mm; Breite 25mm) aufgetragen. Die mit den erfindungsgemäßen Zubereitungen behandelten Stahlbleche wurden so miteinander in Kontakt gebracht, dass sich ein Überlappungsbereich von 10mm ergab. Die Prüfkörper wurden auf Klebspaltdicke verpresst, (wobei als Abstandshalter Glaskugeln mit einem Durchmesser von 200µm genutzt wurden) mit Klammern fixiert und anschließend 30min bei 170°C ausgehärtet. Die Messung erfolgte am Folgetag bei 25°C und einer Zugschergeschwindigkeit von 10mm/min. In allen Fällen wurde für die erfindungsgemäßen Zubereitungen ein kohäsives Bruchverhalten (in der Tabelle als "cf" bezeichnet) beobachtet.

### 3.3 Bestimmung der Standfestigkeit

Zur Bestimmung der Standfestigkeit der Formulierungen wurde deren Abrutschverhalten untersucht. Dazu wurden mittels einer Dreiecksdüse, wie sie beispielsweise zur Applikation von PUR-basierten Scheibenklebstoffen eingesetzt wird, Klebstoffraupen mit einer Höhe von 13mm und einer Breite von 8mm auf gereinigte Stahlbleche aufgetragen. Die Bleche wurden anschließend für 30min bei 120°C so in einem Winkel von 90° im Ofen platziert, dass die Klebstoffraupen vertikal zum Boden standen. Nach dem Ende des Versuchs wurde ermittelt, wie weit sich die Klebstoffraupen von ihrer ursprünglichen Position entfernt hatten. Ein Abrutschen von bis zu 3mm wurde hierbei toleriert und mit "in Ordnung" ("i.O.") bewertet, stärkeres Abrutschen wurde mit "nicht in Ordnung" ("n.i.O.") vermerkt.

### 3.3 Messergebnisse

**Tabelle 2**

| Zubereitung | F1 | F2 | F3 | F4 | F5 | F6 |
|---|---|---|---|---|---|---|
| Fluss [g/min] | 1130 | > 4000 | 235 | 1150 | 460 | > 2400 |
| Standfestigkeit | i.O. | i.O. | i.O. | i.O. | i.O. | i.O. |
| Zugscherfestigkeit [MPa] | 9,3 (cf) | 13,5 (cf) | 14,2 (cf) | 15,1 (cf) | 14,0 (cf) | 11,3 (cf) |

Die in der obigen Tabelle dargestellten Ergebnisse zeigen deutlich, dass erfindungsgemäße Formulierungen (F1 bis F6) gute Applikationseigenschaften (erkenntlich durch den Fluss in [g/min]) bei gleichzeitig hoher Standfestigkeit (d.h. geringem Abrutschverhalten) aufweisen.

## Patentansprüche

1. Bei Applikationstemperaturen unterhalb von 70°C pumpbare, thermisch expandierbare Zubereitung, enthaltend
(a) mindestens ein erstes Epoxidharz E1, das ein Epoxid-Äquivalentgewicht von höchstens 280g/eq und eine Viskosität bei 25°C von höchstens 1250Pa*s aufweist wie in der Beschreibung gemessen,
(b) mindestens ein zweites Epoxidharz E2, das ein Epoxid-Äquivalentgewicht von mindestens 300g/eq und eine Viskosität bei 25°C von höchstens 250Pa*s aufweist wie in der Beschreibung gemessen,
(c) mindestens einen thermisch aktivierbaren Härter,
(d) mindestens ein thermisch aktivierbares Treibmittel sowie
(e) mindestens 1 Gew.-% organische Fasern mit einer Faserlänge von 0,2mm bis 10mm.

2. Zubereitung nach Anspruch 1, **dadurch gekennzeichnet, dass** sie mindestens 20Gew.-%, insbesondere mindestens 30Gew.-%, Füllstoffe, jeweils bezogen auf die gesamte Anwendungszubereitung, enthält.

3. Zubereitung nach Anspruch 2, **dadurch gekennzeichnet, dass** sie als Füllstoff mindestens einen Leichtfüllstoff, insbesondere Glashohlkugeln, enthält.

4. Zubereitung nach einem der Ansprüche 2 oder 3, **dadurch gekennzeichnet, dass** die Zubereitung als Füllstoff mindestens einen anorganischen Füllstoff, insbesondere Kreide, enthält.

5. Zubereitung nach einem der Ansprüche 2 bis 4, **dadurch gekennzeichnet, dass** sie als Füllstoff oberflächenbehandeltes Siliziumdioxid enthält.

6. Zubereitung nach einem der Ansprüche 1 bis 5, **dadurch gekennzeichnet, dass** sie weniger als 1,5Gew.-%, vorzugsweise weniger als 0,5Gew.-%, bezogen auf die gesamte Anwendungszubereitung eines bei 25°C festen Epoxidharzes enthält.

7. Zubereitung nach einem der Ansprüche 1 bis 6, **dadurch gekennzeichnet, dass** das erste Epoxidharz E1
- ein Epoxid-Äquivalentgewicht von höchstens 200g/eq aufweist und/oder
- eine Viskosität bei 25°C von höchstens 20Pa*s aufweist wie in der Beschreibung gemessen, und/oder
- in einer Menge von 10 bis 55Gew.-%, insbesondere von 20 bis 40Gew.-%, bezogen auf die gesamte Anwendungszubereitung, in der Zubereitung enthalten ist.

8. Zubereitung nach einem der Ansprüche 1 bis 7, **dadurch gekennzeichnet, dass** das zweite Epoxidharz E2
- ein Epoxid-Äquivalentgewicht von mindestens 400g/eq aufweist und/oder
- eine Viskosität bei 25°C von höchstens 200Pa*s aufweist wie in der Beschreibung gemessen, und/oder
- in einer Menge von 5 bis 35Gew.-%, insbesondere von 8 bis 25Gew.-%, bezogen auf die gesamte Anwendungszubereitung, in der Zubereitung enthalten ist.

9. Zubereitung nach einem der Ansprüche 1 bis 8, **dadurch gekennzeichnet, dass** sie weiterhin mindestens einen Schlagzähigkeitsmodifikator und/oder mindestens ein Flammschutzmittel enthält.

10. Verfahren zum Versteifen und/oder Verstärken von Bauteilen mit dünnwandigen Strukturen, insbesondere von rohrförmigen Strukturen, **dadurch gekennzeichnet, dass** eine bei Applikationstemperaturen unterhalb von 70°C pumpbare, thermisch expandierbare Zubereitung nach einem der Ansprüche 1 bis 9 bei einer Temperatur unterhalb von 70°C auf die Oberfläche der zu verstärkenden Struktur mit einem Pumpendruck von weniger als 200bar aufgebracht wird, und diese Zubereitung zu einem späteren Zeitpunkt bei Temperaturen oberhalb von 130°C ausgehärtet wird.

11. Verwendung von einer bei Applikationstemperaturen unterhalb von 70°C pumpbaren, thermisch expandierbaren Zubereitung nach einem der Ansprüche 1 bis 9 zur Versteifung und/oder Verstärkung von Bauteilen mit dünnwandigen Strukturen, insbesondere von rohrförmigen Strukturen.

12. Bauteil mit dünnwandiger Struktur, das mit einer bei Applikationstemperaturen unterhalb von 70°C pumpbaren, thermisch expandierbaren Zubereitung nach einem der Ansprüche 1 bis 9, in ausgehärtetem Zustand, versteift und/oder verstärkt wurde.

## Claims

1. A thermally expandable preparation which is pumpable at application temperatures below 70 °C, containing
(a) at least one first epoxy resin E1 having an epoxy equivalent weight of at most 280 g/eq and a viscosity at 25 °C of at most 1250 Pa*s as measured in the description,
(b) at least one second epoxy resin E2 having an epoxy equivalent weight of at least 300 g/eq and a viscosity at 25 °C of at most 250 Pa*s as measured in the description,
(c) at least one thermally activatable curing agent,
(d) at least one thermally activatable blowing agent and
(e) at least 1 wt.% organic fibers having a fiber length of 0.2 mm to 10 mm.

2. The preparation according to claim 1, **characterized in that** it contains at least 20 wt.%, in particular at least 30 wt.%, fillers, based in each case on the total application preparation.

3. The preparation according to claim 2, **characterized in that** it contains at least one lightweight filler, in particular hollow glass spheres, as filler.

4. The preparation according to one of claims 2 or 3, **characterized in that** the preparation contains at least one inorganic filler, in particular chalk, as filler.

5. The preparation according to one of claims 2 to 4, **characterized in that** it contains surface-treated silicon dioxide as filler.

6. The preparation according to one of claims 1 to 5, **characterized in that** it contains less than 1.5 wt.%, preferably less than 0.5 wt.%, based on the total application preparation of an epoxy resin which is solid at 25 °C.

7. The preparation according to one of claims 1 to 6, **characterized in that** the first epoxy resin E1
- has an epoxy equivalent weight of at most 200 g/eq and/or
- has a viscosity at 25 °C of at most 20 Pa*s as measured in the description, and/or
- is contained in the preparation in an amount of from 10 to 55 wt.%, in particular from 20 to 40 wt.%, based on the total application preparation.

8. The preparation according to one of claims 1 to 7, **characterized in that** the second epoxy resin E2
- has an epoxy equivalent weight of at least 400 g/eq and/or
- has a viscosity at 25 °C of at most 200 Pa*s as measured in the description, and/or
- is contained in the preparation in an amount of from 5 to 35 wt.%, in particular from 8 to 25 wt.%, based on the total application preparation.

9. The preparation according to one of claims 1 to 8, **characterized in that** it further contains at least one toughness modifier and/or at least one flame retardant.

10. A method for stiffening and/or reinforcing components having thin-walled structures, in particular tubular structures, **characterized in that** a thermally expandable preparation which is pumpable at application temperatures below 70 °C according to one of claims 1 to 9 is applied to the surface of the structure to be reinforced at a temperature below 70 °C and at a pump pressure of less than 200 bar, and said preparation is cured at a later point in time at temperatures above 130 °C.

11. The use of a thermally expandable preparation which is pumpable at application temperatures below 70 °C according to one of claims 1 to 9 for stiffening and/or reinforcing components having thin-walled structures, in particular tubular structures.

12. A component having a thin-walled structure, which component has been stiffened and/or reinforced, in the cured state, by means of a thermally expandable preparation which is pumpable at application temperatures below 70 °C according to one of claims 1 to 9.

## Revendications

1. Préparation pompable thermiquement expansible à des températures d'application inférieures à 70°C, contenant
(a) au moins une première résine époxy E1 qui présente un poids équivalent époxy d'au plus 280 g/eq et une viscosité à 25 °C d'au plus 1250 Pa*s, mesurée comme indiqué dans la description,
(b) au moins une seconde résine époxy E2 qui présente un poids équivalent époxy d'au moins 300 g/eq et une viscosité à 25°C d'au plus 250 Pa*s, mesurée comme indiqué dans la description,
(c) au moins un durcisseur thermiquement activable,
(d) au moins un agent d'expansion thermiquement activable ainsi que
(e) au moins 1 % en poids de fibres organiques ayant une longueur de fibre de 0,2 mm à 10 mm.

2. Préparation selon la revendication 1, **caractérisée en ce qu'**elle contient au moins 20 % en poids, et en particulier au moins 30 % en poids, de matériau de remplissage, par rapport à la préparation d'application totale.

3. Préparation selon la revendication 2, **caractérisée en ce qu'**elle contient comme matériau de remplissage au moins un matériau de remplissage léger, en particulier des billes de verre creuses.

4. Préparation selon l'une des revendications 2 ou 3, **caractérisée en ce que** la préparation contient comme matériau de remplissage au moins un matériau de remplissage inorganique, en particulier de la craie.

5. Préparation selon l'une des revendications 2 à 4, **caractérisée en ce qu'**elle contient du dioxyde de silicium traité en surface comme matériau de remplissage.

6. Préparation selon l'une des revendications 1 à 5, **caractérisée en ce qu'**elle contient moins de 1,5 % en poids, de préférence moins de 0,5 % en poids, par rapport à la préparation d'application totale, d'une résine époxy solide à 25°°C.

7. Préparation selon l'une des revendications 1 à 6, **caractérisée en ce que** la première résine époxy E1
- a un poids équivalent époxy d'au plus 200 g/eq, et/ou
- a une viscosité à 25°C d'au plus 20Pa*s, mesurée comme indiqué dans la description, et/ou
- est présente dans la préparation en une quantité de 10 à 55 % en poids, en particulier de 20 à 40 % en poids, par rapport à la préparation d'application totale.

8. Préparation selon l'une des revendications 1 à 7, **caractérisée en ce que** la seconde résine époxy E2
- a un poids équivalent époxy d'au moins 400 g/eq et/ou
- a une viscosité à 25°C d'au plus 200 Pa*s, mesurée comme indiqué dans la description, et/ou
- est présente dans la préparation en une quantité de 5 à 35 % en poids, en particulier de 8 à 25 % en poids, par rapport à la préparation d'application totale.

9. Préparation selon l'une des revendications 1 à 8, **caractérisée en ce qu'**elle contient également au moins un agent modificateur de la résistance aux chocs et/ou au moins un retardateur de flamme.

10. Procédé de raidissement et/ou de renforcement de composants à paroi mince, en particulier de structures tubulaires, **caractérisé en ce qu'**à des températures d'application inférieures à 70°C, l'on applique sur la surface de la structure à renforcer à une pression de pompe inférieure à 200 bars, à une température inférieure à 70°C, une préparation pompable thermiquement expansible selon l'une des revendications 1 à 9, et cette préparation est ensuite durcie à une température supérieure à 130°C.

11. Utilisation d'une préparation pompable thermiquement expansible à des températures d'application inférieures à 70°°C selon l'une des revendications 1 à 9 pour raidir et/ou renforcer des composants à parois minces, en particulier des structures tubulaires.

12. Composant ayant une structure à paroi mince qui a été raidie et/ou renforcée à l'état durci avec une préparation pompable thermiquement expansible à des températures d'application inférieures à 70°C selon l'une des revendications 1 à 9 ..
